# EUROPEAN PATENT SPECIFICATION

(11) **EP 3 683 943 B1**
(45) Date of publication and mention of the grant of the patent: **24.03.2021**
(21) Application number: 19152303.4
(22) Date of filing: 17.01.2019
(51) Int. Cl.: H02M 1/12, H02J 9/06, H02M 5/458, H02M 7/5395, H02M 7/217, H02M 7/538, H02M 3/158, H02M 1/00

(54) **POWER CONVERTER**
STROMWANDLER
CONVERTISSEUR DE PUISSANCE

(43) Date of publication of application: 22.07.2020
(73) Proprietor: Cotek Electronic Ind. Co., Ltd., 33548 Taoyuan City (TW)
(72) Inventor: Wu, Chun-Wei, 33548 Taoyuan City (TW); Pai, Chia-Hung, 33548 Taoyuan City (TW); Chang, Chien-Kang, 33548 Taoyuan City (TW)
(74) Representative: 2K Patentanwälte Blasberg Kewitz & Reichel

(56) References cited:
- EP-A1- 1 806 819
- EP-A2- 1 076 403
- EP-A2- 2 759 038
- JP-A- H08 126 352
- JP-A- H09 238 481
- JP-A- 2014 011 831
- US-A1- 2001 026 460
- US-A1- 2002 118 556
- US-A1- 2016 065 056

## Description

### FIELD OF THE INVENTION

The present invention relates to a power converter, and particularly to a power converter improving issues of discontinuous phase transition current and total harmonic distortion (THD) in an output alternating-current power by using control signals.

### BACKGROUND OF THE INVENTION

The U.S. Patents No. 6,310,787 and No. 6,181,581 as well as European Patent No. 1969694B1 disclose a kind of power converter; however, a control means used in the power converter disclosed by the above patents suffers from issues of discontinuous phase transition current and higher total harmonic distortion (THD) in the output alternating-current power.

Furthermore, US 2001/0026460 A1 discloses a switching power converter capable of operation in either Nonconversion, Stepdown, or Stepup Mode. Included is a parallel circuit of three serial connections of a first, a second and a third pair of switches. The junction between the first pair of switches is connected to an a.c. input terminal via an inductor, the junction between the second switch pair grounded, and the junction between the third switch pair connected to an a.c. output terminal via another inductor. The first and third switch pairs are driven at the frequency (e.g. 50 Hz) of an a.c. input voltage, and the second switch pair at a higher frequency (e.g. 20 kHz), in Nonconversion Mode; the first switch pair at the low frequency, and the second and third switch pairs at the high frequency, in Stepdown Mode; and the first and second switch pairs at the high frequency, and the third switch pair at low frequency, in Stepup Mode. The second switch pair is invariably driven at the high frequency.

EP 1076403 A2 discloses a power converter which includes first and second voltage busses and a neutral bus. A first switching circuit, e.g., a rectifier circuit, is operative to selectively couple an input node thereof to the first and second voltage busses. A balancer circuit is operative to selectively couple the neutral bus to the first and second voltage busses such that relative magnitudes of respective first and second voltages on the first and second voltage busses are controlled responsive to respective first and second rates at which the balancer circuit couples the first and second voltage busses to the neutral bus. A second switching circuit, e.g., an inverter circuit, is operative to selectively couple the first and second voltage busses to a load connected at an output node thereof. The balancer circuit preferably includes first and second switches operative to selectively couple respective ones of the first and second voltage busses to the neutral bus through an inductance such that the relative magnitudes of the first and second voltages are controlled responsive to respective first and second duty cycles of the first and second switches.

EP 1806819 A1 discloses a power backup processor comprising a first converter for converting AC to DC and having a first AC input and a first DC output, the first AC input being provided to be connected to an AC power supply; a second converter for converting DC to AC and having a first DC input and a first AC output, the first AC output provided to be connected to a critical load; a third converter for converting a first DC voltage to a second DC voltage, the DC converter having a second DC input and a second DC output, the second DC input being provided to be connected to a DC power supply. A series of controllers is provided to drive the first, second and third converters. The second DC output is connected to the first DC input. The first DC output is connected to the first DC input.

JP H09-238481 A discloses power converting equipment which is provided with a main circuit, an AC power supply and an AC output terminal. The main circuit is provided with a converter circuit wherein two switching circuits are connected in series which are constituted by connecting switching elements 1s-6s and diodes 1d-6d in inverse parallel, a changeover circuit wherein the two switching circuits are connected in series, an inverter circuit wherein the two switching circuits are connected in series, and a capacitor. The converter circuit, the changeover circuit, the inverter circuit, and the capacitor are connected in parallel to each other. A reference command based on a reference signal from a reference signal generating circuit is subjected to pulse width modulation, and used as the timing signal to the changeover circuit, to obtain a stable output voltage free from distortion when phase shift is generated between an input voltage and an output voltage.

JP 2014011831 A discloses an AC / DC power conversion device which comprises: a rush current prevention unit 3 which is composed of a first relay unit 3b and resistance 3a and is connected to an AC power supply 1 at one end of the rush current prevention unit 3; a first reactor 4 whose one end is connected to the other end of the rush current prevention unit 3; a first power conversion unit 5 which is connected to the other end of the reactor 4 at an input of the first power conversion unit 5, and is a single-phase full bridge inverter; a second power conversion unit 6 which is connected between an output of the first power conversion unit 5 and the other power line 18 of the AC power supply 1, and operates by a drive signal of one pulse applied for each half period of the AC power supply 1 to convert AC to positive and negative DC; and a positive electrode side capacitor 7 and a negative electrode side capacitor 8 to which the second power conversion unit 6 supplies power. When the AC/DC power conversion device is connected to the AC power supply 1 to start up, a first capacitor 5C which is a DC power supply of the first power conversion unit 5, the positive electrode side capacitor 7 and the negative electrode side capacitor 8 are charged by the AC power supply 1 through the resistance 3a.

US 2016/065056 A1 discloses an AC-DC rectifier comprising an input configured to receive input AC power from an AC power source having an input AC voltage waveform, an output configured to provide output DC power to a load, an active power filter coupled to the input, an inverter coupled to the input and configured to convert the input AC voltage waveform into an output AC voltage waveform at a desired magnitude, a rectifier portion coupled between the inverter and the output and configured to convert the output AC voltage waveform into the output DC power, and a controller coupled to the active power filter and the inverter. The controller also configured to operate the active power filter to provide Power Factor Correction (PFC) at the input and to operate the inverter to provide the output AC voltage waveform at the desired magnitude to the rectifier portion.

US 2002/ 118556 A1 discloses a power converter suitable for use in an uninterruptible power supply (UPS) includes first and second voltage busses, an input port having a first terminal coupled to one of the first and second voltage busses, a neutral bus and an output terminal. A first switching circuit selectively couples a second terminal of the input port to the first and second voltage busses. A second switching circuit selectively couples the first and second voltage busses to the output terminal. A third switching circuit selectively couples the first and second voltage busses to the neutral bus. The first, second and third switching circuits are operative to produce an AC output voltage at the output terminal from a DC input voltage at the input port such that alternating ones of the first and second terminals of the first input port are referenced to the neutral bus for successive first and second half cycles of the AC output voltage.

EP 2759038 discloses an uninterruptible power supply (UPS) system which includes first and second busses, a first switching circuit configured to selectively couple an AC source to the first and second busses and a second switching circuit configured to selectively couple the first and second busses to a load. The system also includes a storage capacitor and a third switching circuit configured to couple the storage capacitor between the first and second busses. The system further includes a control circuit configured to control the first, second and third switching circuits to generate an AC voltage at the load.

JP H08-126352 A discloses a serial circuit composed of first and second transistors Q1 and Q2, second serial circuit composed of third and fourth transistors Q3 and Q4, third serial circuit composed of fifth and sixth transistors Q5 and Q6, and capacitor C are connected in parallel with each other. One terminal of an AC power source is connected to the midpoint of the transistors Q1 and Q2 through a first reactor L1 and a load is connected between the midpoint of the transistors Q3 and Q4 and the other terminal of the power source through a second reactor L2. Then a third reactor L3 is connected between the midpoint of the transistors Q5 and Q6 and the terminal of the power source. The control of the transistors Q1-Q6 is switched in a first mode in which the output voltage V0 of a power converter is equal to the input AC voltage Vin, second mode in which the output voltage V0 is lower than the input voltage Vin, and third mode in which the output voltage V0 is higher than the input voltage Vin.

### SUMMARY OF THE INVENTION

The primary object of the present invention is to solve the issues of discontinuous phase transition current and total harmonic distortion (THD) in an output alternating-current (AC) power of an circuit.

To achieve the above object, the present invention provides a power converter comprising an alternating-current (AC) power input line, an AC power output line, a neutral line, a first capacitor connected to the AC power output line and the neutral line, a first inductor connected to the AC power input line, a first bus, a second bus, a second capacitor connected to the first bus and the second bus, a first half-bridge circuit, a second half-bridge circuit, a third half-bridge circuit, a second inductor and a controller. The first half-bridge circuit comprises a first switch connected to the first bus, and a second switch connected in series with the first switch and connected to the second bus, wherein the first inductor is connected to a node between the first switch and the second switch. The second half-bridge circuit comprises a third switch connected to the first bus, and a fourth switch connected in series with the third switch and connected to the second bus, wherein the AC power output line is connected to a node between the third switch and the fourth switch. The third half-bridge circuit comprises a fifth switch connected to the first bus, and a sixth switch connected in series with the fifth switch and connected to the second bus, wherein one end of the second inductor is connected to a node between the fifth switch and the sixth switch and the other end is connected to the neutral line. The controller provides a control signal to each of the first switch, the second switch, the third switch, the fourth switch, the fifth switch and the sixth switch. The control signal provided for the second half-bridge circuit or the third half-bridge circuit by the controller is generated by comparing a mixed sine wave with a high-frequency triangular carrier, wherein the mixed sine wave is generated by mixing a third-order harmonic of a low-frequency sine wave into the low-frequency sine wave, and the low-frequency sine wave for modulating the control signal of the first half-bridge circuit and the second half-bridge circuit has an inverted phase from the phase of the low-frequency sine wave for modulating the control signal for the third half-bridge circuit.

In one embodiment, the power converter further comprised s a third inductor connected to the AC power output line and connected to the node between the third switch and the fourth switch, and a third capacitor connected to a node between the AC power output line and the neutral line, wherein the third inductor and the third capacitor together form a filter circuit.

In one embodiment, the frequency of the low-frequency sine wave is equal to the frequency of an output AC power inputted to the power converted or outputted from the power converter.

In one embodiment, the control signal provided by the controller to each of the first switch, the second switch, the third switch and the fourth switch is generated by comparing the low-frequency sine wave with the high-frequency triangular carrier.

In one embodiment, the power converter comprises a first differential amplifier, a second differential amplifier, a third differential amplifier, a first current sensing element connected in series with the AC power input line and the first inductor and outputting an input current signal to the controller, a second current sensing element connected in series with the AC power output line and outputting an output current signal to the controller, a third inductor connected to the AC power output line and connected to the node between the third switch and the fourth switch, a third capacitor connected to the node between the AC power output line and the neutral line and forming the filter circuit together with the third inductor, and a third current sensing element connected to the node between the third switch and the fourth switch and connected in series with the third inductor to output an inverter current signal to the controller. The first differential amplifier comprises a first input end connected to the AC power input line, a second input end connected to the neutral line, and a first output end providing an input voltage signal to the controller. The second differential amplifier comprises a third input end connected to the AC power output line, a fourth input end connected to the neutral line, and a second output end providing an output voltage signal to the controller. The third differential amplifier comprises a fifth input end connected to the first bus, a sixth input end connected to the second bus, and a third output end providing a bus voltage signal to the controller. The controller adjusts the control signals outputted to the first half-bridge circuit on the basis of the input current signal, the input voltage signal and the bus voltage signal, and adjusts the control signals outputted to the second half-bridge circuit on the basis of the output current signal, the output voltage signal and the inverter current signal.

In one embodiment, each of the first input end, the second input end, the third input end, the fourth input end, the fifth input end and the sixth input end is provided with a serial voltage dividing resistor, and each of the serial voltage dividing resistor comprises of at least two resistors.

In one embodiment, the power converter comprises a direct-current (DC) power converting circuit connected to the first bus and the second bus.

The present invention provides the following features compared to the prior art. In the power converter of the present invention, the first half-bridge circuit, the second half-bridge circuit and the third half-bridge circuit all adopt high-frequency switching control, and the control signal for controlling the third half-bridge circuit is generated by comparing the mixed sine wave with the high-frequency triangular carrier, wherein the mixed sine wave is generated by mixing a third-order harmonic of the low-frequency sine wave into the low-frequency sine wave. Thus, during phase transition of the output AC power (i.e., from a phase angle of 355 degrees to a phase angle of 5 degrees, or from a phase angle of 175 degrees to a phase angle of 185 degrees), the output current can be kept continuous, thus achieving an advantage of high phase transition stability. Further, the present invention at the same time reduces total harmonic distortion (THD) of the output AC power.

### BRIEF DESCRIPTION OF THE DRAWINGS

Fig. 1 is a schematic diagram of circuit composition of a power converter according to an embodiment of the present invention;
Fig. 2 is a schematic diagram of implementation of a controller generating control signals according to an embodiment of the present invention;
Fig. 3 is a schematic diagram of control signals generated according to an embodiment of the present invention;
Fig. 4 is a comparison diagram of waveforms control signals and an output alternating-current (AC) power according to an embodiment of the present invention;
Fig. 5 is a schematic diagram of implementation of a controller generating control signals according to another embodiment of the present invention;
Fig. 6 is a comparison diagram of waveforms control signals and an output AC power according to another embodiment of the present invention;
Fig. 7 is a schematic diagram of circuit composition of a power converter according to another embodiment of the present invention;
Fig. 8 is a schematic diagram of units of a first differential amplifier according to an embodiment of the present invention; and
Fig. 9 is schematic diagram of circuit composition of a power converter according to another embodiment of the present invention.

### DETAILED DESCRIPTION OF THE PREFERRED EMBODIMENTS

Details and technical contents of the present invention are described with the accompanying drawings below.

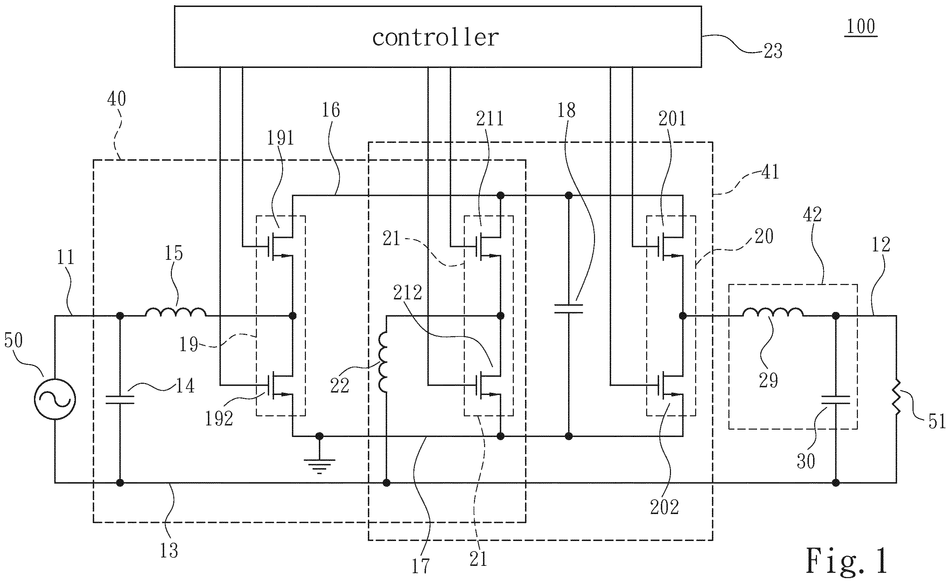

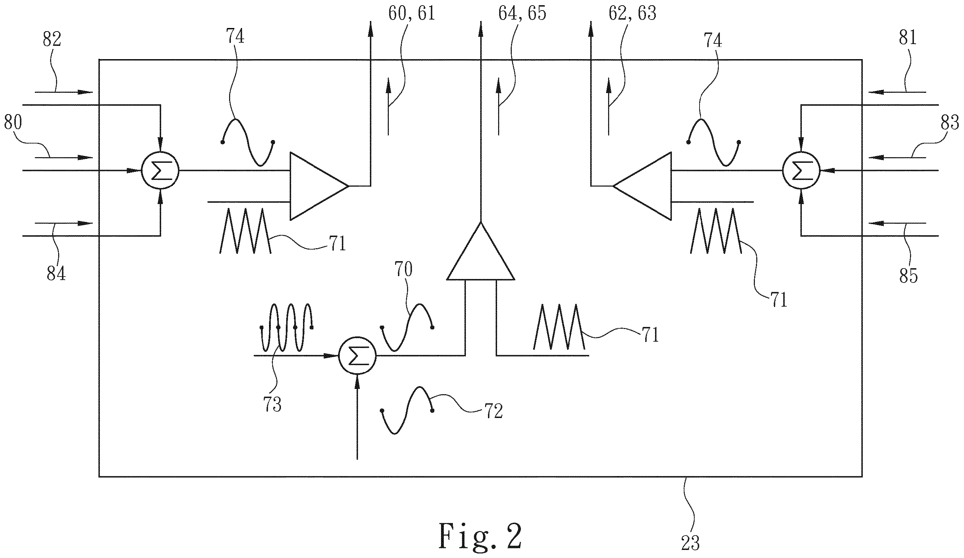

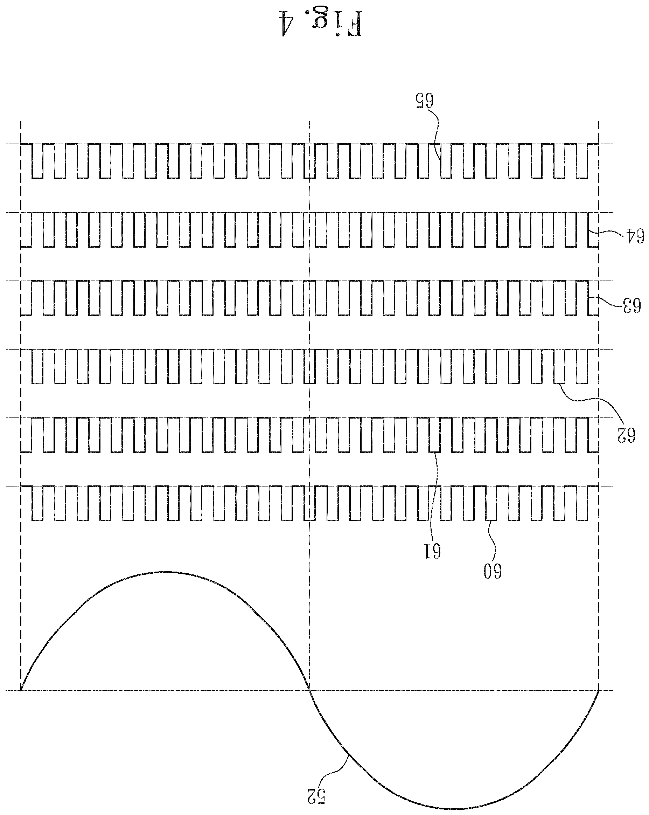

Referring to Fig. 1, Fig. 2, Fig. 3 and Fig. 4, the present invention provides a power converter 100. The power converter 100 may be constructed in an uninterrupted power system or a communication apparatus and may be implemented in a plural quantity by series connection. The power converter 100 includes an alternating-current (AC) power input line 11, an AC power output line 12, a neutral line 13, a first capacitor 14 connected to the AC power input line 11 and the neutral line 13, a first inductor 15 connected to the AC power input line 11, a first bus 16, a second bus 17, a second capacitor 18 connected to the first bus 16 and the second bus 17, a first half-bridge circuit 19, a second half-bridge circuit 20, a third half-bridge circuit 21, a second inductor 22 and a controller 23. The AC power input line 11 and the neutral line 13 are respectively connected to positive and negative terminals of an AC power source 50, and the AC power output line 12 and the neutral line 13 are respectively connected to one end of a load 51 so as to provide an output AC power 52 to the load 51. The first half-bridge circuit 19 includes a first switch 191 connected to the first bus 16, and a second switch 192 connected in series to the first switch 191 and connected to the second bus 17. The first inductor 15 is connected to the node between the first switch 191 and the second switch 192. The second half-bridge circuit 20 includes a third switch 201 connected to the first bus 16, and a fourth switch 202 connected in series to the third switch 201 and connected to the second bus 17. The AC power output line 12 is connected to the node between the third switch 201 and the fourth switch 202. The third half-bridge circuit 21 includes a fifth switch 211 connected to the first bus 16, and a sixth switch 212 connected in series with the fifth switch 211 and connected to the second bus 17. One end of the second inductor 22 is connected to the node between the fifth switch 211 and the sixth switch 212, and the other end is connected to the neutral line 13. Further, each of the first switch 191, the second switch 192, the third switch 201, the fourth switch 202, the fifth switch 211 and the sixth switch 212 may be a metal-oxide semiconductor field-effect transistor (MOSFET) or an insulated gate bipolar transistor (IGBT). Further, in the power converter 100 of the present invention, the first capacitor 14, the first inductor 15, the second inductor 22, the first switch 191, the second switch 192, the fifth switch 211 and the sixth switch 212 form a rectification circuit 40. Further, in the power converter 100, the second inductor 22, the third inductor 29, the third switch 201, the fourth switch 202, the fifth switch 211 and the sixth switch 212 form an inverter circuit 41. The rectification circuit 40 is for converting AC power to direct current (DC) power, and the inverter circuit 41 is for converting DC power to AC power.

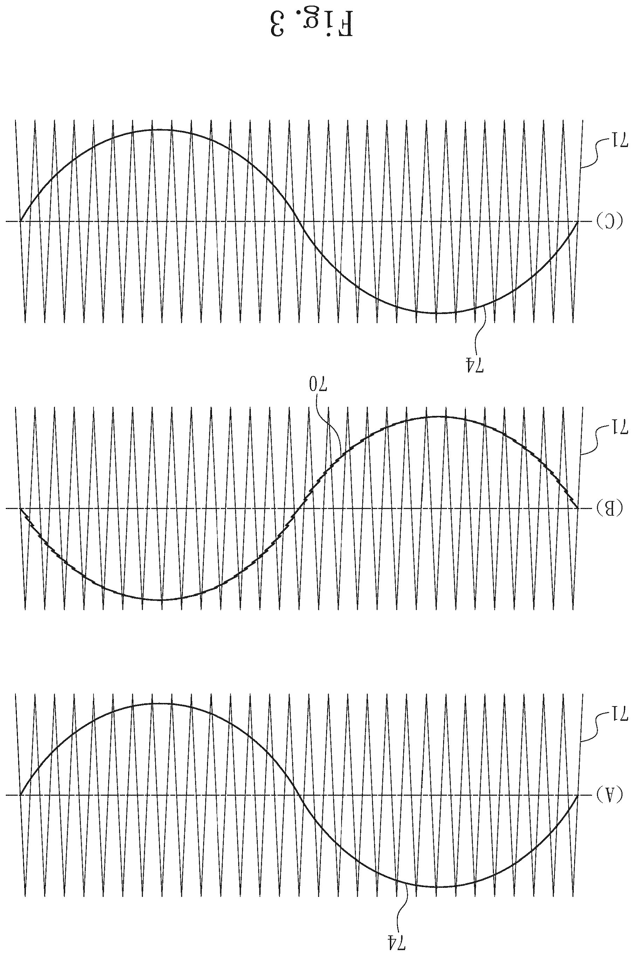

Referring to Fig. 1, Fig. 2, Fig. 3, and Fig. 4, the controller 23 is a microcontroller unit (MCU), and the controller 23 is connected to the first switch 191, the second switch 192, the third switch 201, the fourth switch 202, the fifth switch 211 and the sixth switch 212. The controller 23 is configured to individually send a control signal (60, 61, 62, 63, 64, 65) to the first switch 191, the second switch 192, the third switch 201, the fourth switch 202, the fifth switch 211 and the sixth switch 212, wherein each of the control signals (60, 61, 62, 63, 64, 65) is generated through pulse width modulation (PWM). The first switch 191, the second switch 192, the third switch 201, the fourth switch 202, the fifth switch 211 and the sixth switch 212 become a conducted state or a cut-off state on the basis of the respective control signals (60, 61, 62, 63, 64, 65) received. Further, in one embodiment of the present invention, the control signals 64 and 65 which are provided by the controller 23 and transmitted to the third half-bridge circuit 21 are generated by comparing a mixed sine wave 70 with a high-frequency triangular carrier 71 so as to eliminate total harmonic distortion of the output AC power 52 and improve the issue of a discontinuous output current, wherein the mixed sine wave 70 is generated by mixing a third-order harmonic of a low-frequency sine wave 72 (denoted by 73 in the figures) into the low-frequency sine wave 72. The third-order harmonic 73 is a sine wave having a frequency higher than that of the low-frequency sine wave 72. Further, the control signals 64 and 65 received by the fifth switch 211 and the sixth switch 212 may be designed to have mutually inverted phases; that is, the sixth switch 212 is cut off when the fifth switch 211 is conducted, and the sixth switch 212 is conducted when the fifth switch 211 is cut off. Further, the frequency of the low-frequency sine wave 72 is equal to the frequency of the output AC power 52 inputted to the power converter 100 or outputted from the power converter 100. For example, when the frequency of the output AC power 52 is 50 Hz, the frequency of the low-frequency sine wave 72 is also 50 Hz. Further, each of the control signals (60, 61, 62, 63) outputted by the controller 53 to the first switch 191, the second switch 192, the third switch 201 and the fourth switch 202 is respectively generated by comparing another low-frequency sine wave 74 with the high-frequency triangular carrier 71. Further, in one embodiment of the present invention, the low-frequency sine wave 74 for modulating the control signals (60, 61, 62, 63) for the first half-bridge circuit 19 and the second half-bridge circuit 20 have an inverted phase from that of the low-frequency sine wave 72 for modulating the control signals 64 and 65 for the third half-bridge circuit 21. Referring to Fig. 3, wherein Fig. 3(A) and Fig. 3(C) show respectively schematic diagrams of modulation of the control signals 60, 61, 62 and 63 outputted to the first half-bridge circuit 19 and the second half-bridge circuit 20, and Fig. 3(B) shows a schematic diagram of modulation of the control signals 64 and 65 outputted to the third half-bridge circuit 21. Further, the control signals 60 and 61 received by the first switch 191 and the second switch 192 may be designed to have mutually inverted phases, and the control signals 62 and 63 received by the third switch 201 and the fourth switch 202 may be designed to have mutually inverted phases. Such design of having mutually inverted phases is for preventing short-circuitry of the half-bridge circuits, and associated details are undoubtedly known to a person skilled in the art and are thus omitted herein.

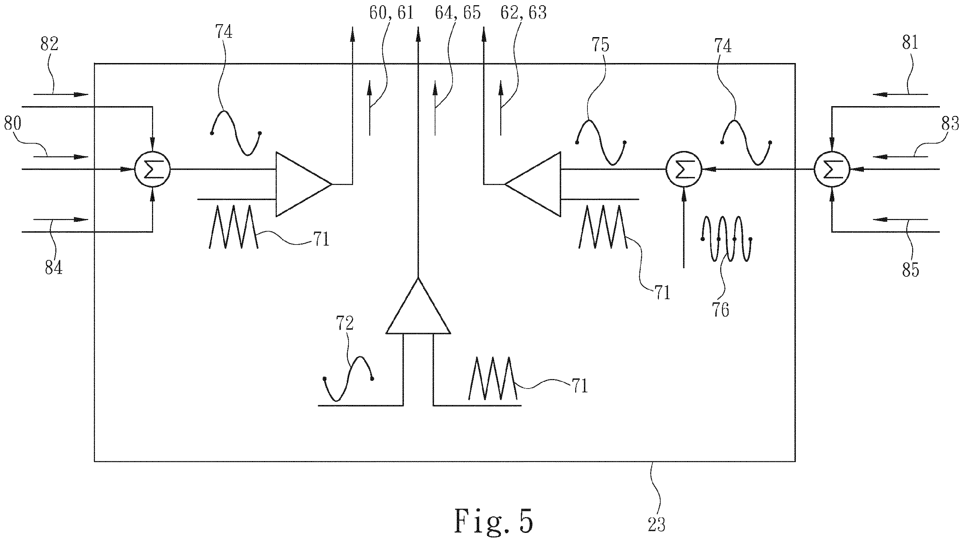

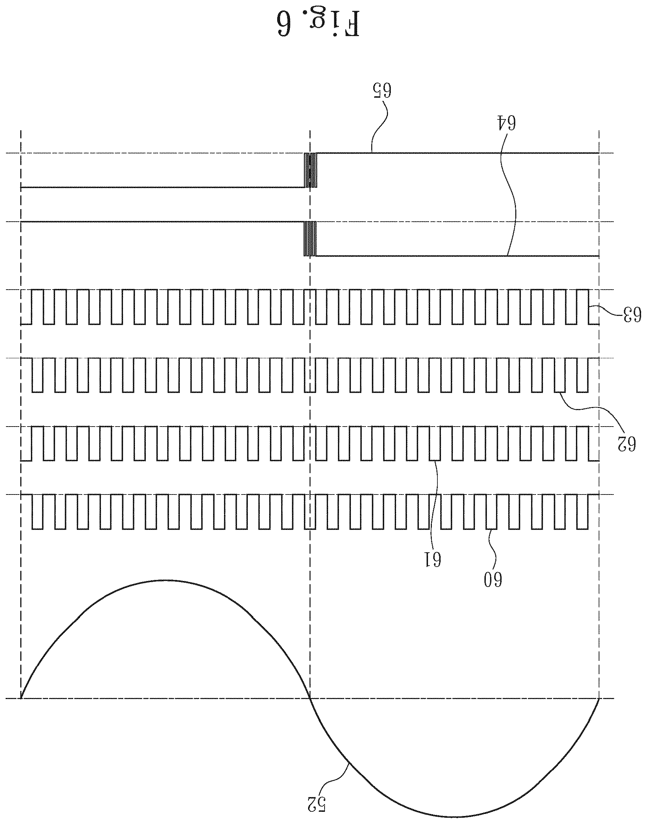

Referring to Fig. 5, in another embodiment, the control signals 64 and 65 provided for the third half-bridge circuit 21 by the controller 23 are not modulated according to the foregoing embodiment; that is, the control signals 64 and 65 are generated without using the mixed sine wave 70. In this embodiment, the control signals 62 and 63 provided for the second half-bridge circuit 20 by the controller 23 are generated by comparing the mixed sine wave 75 with the high-frequency triangular carrier 71, wherein the mixed sine wave 75 is generated by mixing a third-order harmonic of the low-frequency sine wave 74 (denoted as 76 in the figures) into the low-frequency sine wave 74. Further, in this embodiment, the control signals 60 and 61 used for controlling the first half-bridge circuit 19 may be high-frequency control signals, and the control signals 64 and 65 used for controlling the third half-bridge circuit 21 may be high-frequency control signals or low-frequency control signals according to actual implementation requirements. Further referring to Fig. 6, in one embodiment, the control signals 64 and 65 are fundamentally in low frequencies, and the time point for switching control potentials of the control signals 64 and 65 are corresponding to the time point when the output AC power 52 is between a phase angle of 175 degrees to 185 degrees or 355 degrees to 5 degrees. In this embodiment, the control signals 64 and 65 are implemented by a high frequency in the two intervals above.

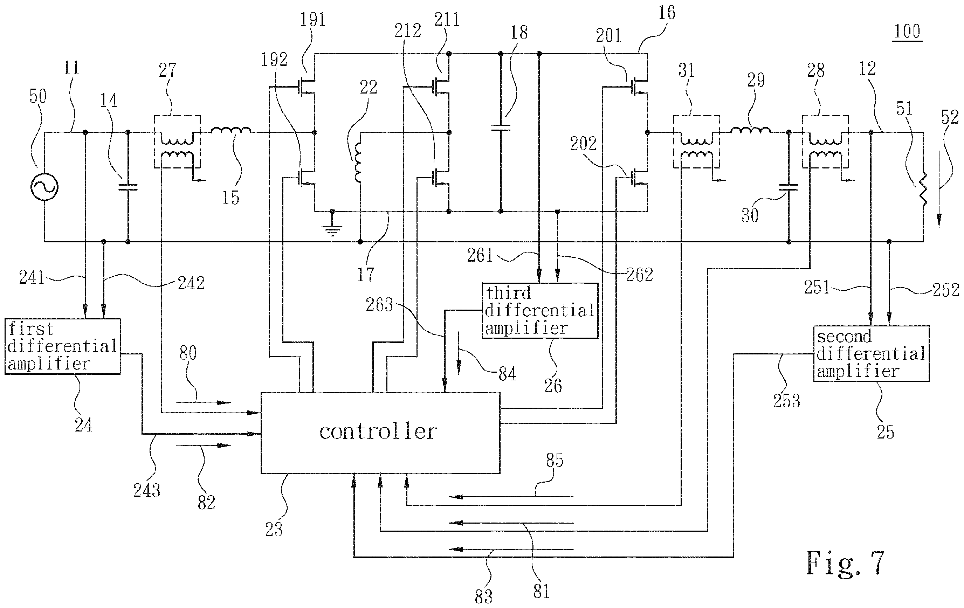

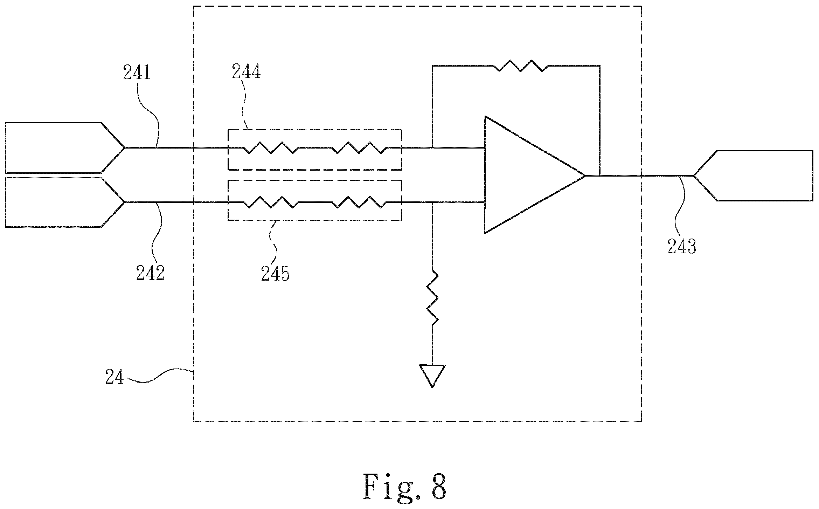

Also referring to Fig. 7, in one embodiment, the power converter 100 includes a first differential amplifier 24, a second differential amplifier 25, a third differential amplifier 26, a first current sensing element 27 connected in series with the AC power input line 11 and the first inductor 15 and outputting an input current signal 80 to the controller 23, and a second current sensing element 28 connected in series with the AC power output line 12 and outputting an output current signal 81 to the controller 23. The first differential amplifier 24 includes a first input end 241 connected to the AC power input line 11, a second input end 242 connected to the neutral line 13, and a first output end 243 providing an input voltage signal 82 to the controller 23. The second differential amplifier 25 includes a third input end 251 connected to the AC power output line 12, a fourth input end 252 connected to the neutral line 13, and a second output end 253 providing an output voltage signal 83 to the controller 23. The third differential amplifier 26 includes a fifth input end 261 connected to the first bus 16, a sixth input end 262 connected to the second bus 17, and a third output end 263 providing a bus voltage signal 84 to the controller 23. Accordingly, the controller 23 may adjust the control on the first switch 191, the second switch 192, the third switch 201 and the fourth switch 202 according to a current operating status and perform compensation. Referring to Fig. 8, in one embodiment, the first input end 241 and the second input end 242 are respectively provided with serial voltage dividing resistors 244 and 245, wherein each of the serial voltage dividing resistors 244 and 245 comprises at least two resistors. Further, in the drawings of the application, although the drawings of the application shows that the serial voltage dividing resistors 244 and 245 are only provided on the first input end 241 and the second input end 242, in the implementation of the present invention, the third input end 251, the fourth input end 252, the fifth input end 261 and the sixth input end 262 may also be provided with the serial voltage dividing resistor (not shown). Accordingly, the serial voltage dividing resistors 244 and 245 are able to jointly distribute the received voltage and current.

Refer to Fig. 7, the power converter 100 further includes a third inductor 29 connected to the AC power output line 12 and connected to the node between the third switch 201 and the fourth switch 202, and a third capacitor 30 connected to the node between the AC power output line 12 and the neutral line 13, wherein the third inductor 29 and the third capacitor 30 together form a filter circuit 42 to filter out the noise from the inverter circuit 41. Moreover, in this embodiment, the power converter 100 further includes a third current sensing element 31 connected to the node between the third switch 201 and the fourth switch 202 and connected in series with the third inductor 29 so as to output an inverter current signal 85 to the controller 23. The controller 23 adjusts the control signals 60 and 61 outputted to the first half-bridge circuit 19 on the basis of the input current signal 80, the input voltage signal 82 and the bus voltage signal 84, and adjusts the control signals 62 and 63 outputted to the second half-bridge circuit 20 on the basis of the output current signal 81, the output voltage signal 83 and the inverter current signal 85.

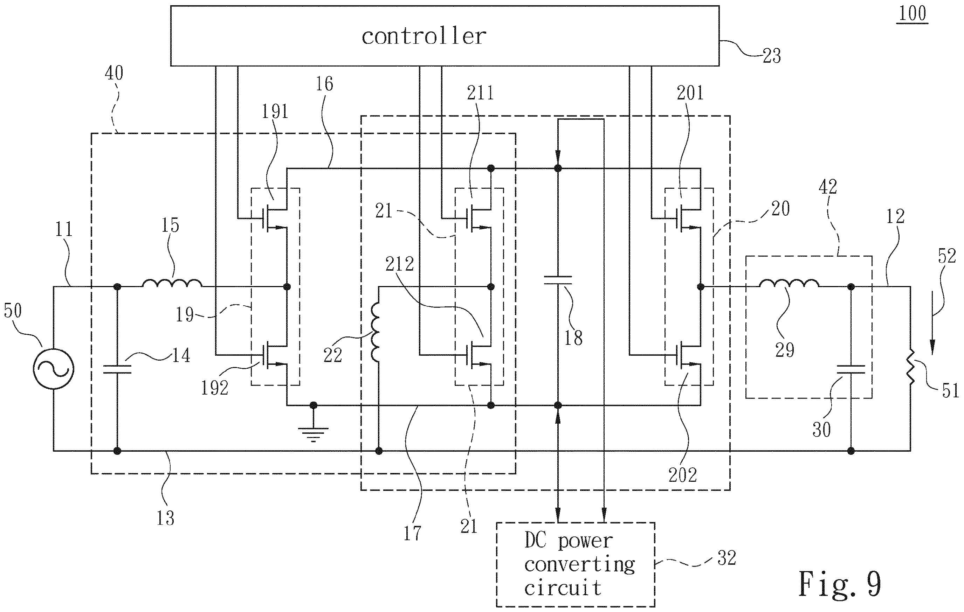

Referring to Fig. 9, in one embodiment, the power converter 100 further includes a DC power converting circuit 32 connected to the first bus 16 and the second bus 17. Further, the DC power converting circuit 32 may be used for modulating DC power or be used to charge an energy storage element included so as to serve as a backup power device of the power converter 100. The energy storage element may be a battery or a super capacitor.

In conclusion, the control signals 62 , 63, 64 and 65 for the second half-bridge circuit 20 or the third half-bridge circuit 21 are generated by comparing the mixed sine wave 70 (or 75) with the high-frequency triangular carrier 71. Thus, the output current during the phase transition (i.e., from a phase angle of 355 degrees to a phase angle of 5 degrees or from a phase angle of 175 degrees or a phase angle of 185 degrees) of the output AC power 52 may be kept continuous, achieving the feature of high phase transition stability. Further, the present invention at the same time reduces the total harmonic distortion of the output AC power 52.

## Claims

1. A power converter (100), comprising
an alternating-current (AC) power input line (11),
an AC power output line (12),
a neutral line (13),
a first capacitor (14), connected to the AC power input line (11) and the neutral line (13),
a first inductor (15), connected to the AC power input line (11),
a first bus (16) and a second bus (17),
a second capacitor (18), connected to the first bus (16) and the second bus (17),
a first half-bridge circuit (19) comprising a first switch (191) connected to the first bus (16), and a second switch (192) connected in series with the first switch (191) and connected to the second bus (17), wherein the first inductor (15) is connected to a node between the first switch (191) and the second switch (192),
a second half-bridge circuit (20) comprising a third switch (201) connected to the first bus (16), and a fourth switch (202) connected in series with the third switch (201) and connected to the second bus (17), wherein the AC power output line (12) is connected to a node between the third switch (201) and the fourth switch (202),
a third half-bridge circuit (21),, comprising a fifth switch (211) connected to the first bus (16), and a sixth switch (212) connected in series with the fifth switch (211) and connected to the second bus (17),
a second inductor (22) having one end connected to a node between the fifth switch (211) and the sixth switch (212) and one other end connected to the neutral line (13), and
a controller (23) configured to provide a control signal (60, 61, 62, 63, 64, 65) to each of the first half-bridge circuit (19), the second half-bridge circuit (20) and the third half-bridge circuit (21);
wherein the power converter (100) is **characterized in that**:
the control signal (62, 63, 64, 65) provided for the second half-bridge circuit (20) or the third half-bridge circuit (21) by the controller (23) is generated by comparing a mixed sine wave (70) with a high-frequency triangular carrier (71), the mixed sine wave (70) is generated by mixing a third-order harmonic (73) of a low-frequency sine wave (72) into the low-frequency sine wave (72), and the low-frequency sine wave (72) for modulating the control signal (60, 61, 62, 63) of the first half-bridge circuit (19) and the second half-bridge circuit (20) has an inverted phase from the phase of the low-frequency sine wave (72) for modulating the control signal (64, 65) of the third half-bridge circuit (21).

2. The power converter (100) of claim 1, further comprising a third inductor (29) connected to the AC power output line (12) and connected to the node between the third switch (201) and the fourth switch (202), and a third capacitor (30) connected to a node between the AC power output line (12) and the neutral line (13), wherein the third inductor (29) and the third capacitor (30) together form a filter circuit (42).

3. The power converter (100) of claim 1, wherein a frequency of the low-frequency sine wave (72) is equal to a frequency of an output AC power (52) inputted to the power converter (100) or outputted from the power converter (100).

4. The power converter (100) of claim 1 or claim 3, wherein the control signal (60, 61, 62, 63) provided for each of the first switch (191), the second switch (192), the third switch (201) and the fourth switch (202) by the controller (23) is generated by comparing the low-frequency sine wave (72) with the high-frequency triangular carrier (71).

5. The power converter (100) of claim 1 further comprises a first differential amplifier (24), a second differential amplifier (25), a third differential amplifier (26), a first current sensing element (27) connected in series with the AC power input line (11) and the first inductor (15) and outputting an input current signal (80) to the controller (23), a second current sensing element (28) connected in series with the AC power output line (12) and outputting an output current signal (81) to the controller (23), a third inductor (29) connected to the AC power output line (12) and connected to the node between the third switch (201) and the fourth switch (202), a third capacitor (30) connected to the node between the AC power output line (12) and the neutral line (13) and forming a filter circuit (42) together with the third inductor (29), and a third current sensing element (31) connected to the node between the third switch (201) and the fourth switch (202) and connected in series with the third inductor (29) to output an inverter current signal (85) to the controller (23);
wherein the first differential amplifier (24) comprises a first input end (241) connected to the AC power input line (11), a second input end (242) connected to the neutral line (13), and a first output end (243) providing an input voltage signal (82) to the controller (23), the second differential amplifier (25) comprises a third input end (251) connected to the AC power output line (12), a fourth input end (252) connected to the neutral line (13), and a second output end (253) providing an output voltage signal (83) to the controller (23), the third differential amplifier (26) comprises a fifth input end (261) connected to the first bus (16), a sixth input end (262) connected to the second bus (17), and a third output end (263) providing a bus voltage signal (84) to the controller (23), and the controller (23) adjusts the control signals (60) outputted to the first half-bridge circuit (19) on a basis of the input current signal (80), the input voltage signal (82) and the bus voltage signal (84), and adjusts the control signals (60) outputted to the (20) on a basis of the output current signal (81), the output voltage signal (83) and the inverter current signal (85).

6. The power converter (100) of claim 5, wherein each of the first input end (241), the second input end (242), the third input end (251), the fourth input end (252), the fifth input end (261) and the sixth input end (262) is provided with a serial voltage dividing resistor (244, 245), and each of the serial voltage dividing resistors (244, 245) comprises of at least two resistors.

7. The power converter (100) of claim 1, further comprising a direct-current (DC) power converting circuit (32) connected to the first bus (16) and the second bus (17).

## Patentansprüche

1. Leistungswandler (100), umfassend
eine Wechselstrom (AC)-Netzeingangsleitung (11),
eine AC-Netzausgangsleitung (12),
eine Nullleitung (13),
einen ersten Kondensator (14), der mit der AC-Netzeingangsleitung (11) und der Nullleitung (13) verbunden ist,
eine erste Induktivität (15), die mit der AC-Netzeingangsleitung (11) verbunden ist,
einen ersten Bus (16) und einen zweiten Bus (17),
einen zweiten Kondensator (18), der mit dem ersten Bus (16) und dem zweiten Bus (17) verbunden ist,
eine erste Halbbrückenschaltung (19), die einen ersten Schalter (191), der mit dem ersten Bus (16) verbunden ist, und einen zweiten Schalter (192) umfasst, der mit dem ersten Schalter (191) in Reihe geschaltet und mit dem zweiten Bus (17) verbunden ist, wobei die erste Induktivität (15) mit einem Knoten zwischen dem ersten Schalter (191) und dem zweiten Schalter (192) verbunden ist,
eine zweite Halbbrückenschaltung (20) mit einem dritten Schalter (201), der mit dem ersten Bus (16) verbunden ist, und einem vierten Schalter (202), der in Reihe mit dem dritten Schalter (201) geschaltet und mit dem zweiten Bus (17) verbunden ist, wobei die AC-Netzausgangsleitung (12) mit einem Knotenpunkt zwischen dem dritten Schalter (201) und dem vierten Schalter (202) verbunden ist,
eine dritte Halbbrückenschaltung (21), die einen fünften Schalter (211), der mit dem ersten Bus (16) verbunden ist, und einen sechsten Schalter (212) umfasst, der in Reihe mit dem fünften Schalter (211) geschaltet und mit dem zweiten Bus (17) verbunden ist,
eine zweite Induktivität (22), deren eines Ende mit einem Knotenpunkt zwischen dem fünften Schalter (211) und dem sechsten Schalter (212) verbunden ist und deren anderes Ende mit der Nullleitung (13) verbunden ist, und
einen Controller (23), der so konfiguriert ist, dass er ein Steuersignal (60, 61, 62, 63, 64, 65) an jede der ersten Halbbrückenschaltung (19), der zweiten Halbbrückenschaltung (20) und der dritten Halbbrückenschaltung (21) liefert;
wobei der Stromrichter (100) **dadurch gekennzeichnet ist, dass**:
das von der Steuerung (23) für die zweite Halbbrückenschaltung (20) oder die dritte Halbbrückenschaltung (21) bereitgestellte Steuersignal (62, 63, 64, 65) durch Vergleich einer gemischten Sinuswelle (70) mit einem hochfrequenten Dreiecksträger (71) erzeugt wird, die gemischte Sinuswelle (70) durch Einmischen einer Harmonischen dritter Ordnung (73) einer niederfrequenten Sinuswelle (72) in die niederfrequente Sinuswelle (72) erzeugt wird, und die niederfrequente Sinuswelle (72) zur Modulation des Steuersignals (60, 61, 62, 63) der ersten Halbbrückenschaltung (19) und der zweiten Halbbrückenschaltung (20) eine invertierte Phase gegenüber der Phase der niederfrequenten Sinuswelle (72) zur Modulation des Steuersignals (64, 65) der dritten Halbbrückenschaltung (21) aufweist.

2. Leistungswandler (100) nach Anspruch 1, ferner umfassend eine dritte Induktivität (29), die mit der AC-Netzausgangsleitung (12) verbunden ist und mit dem Knoten zwischen dem dritten Schalter (201) und dem vierten Schalter (202) verbunden ist, und einen dritten Kondensator (30), der mit einem Knoten zwischen der AC-Natzausgangsleitung (12) und der neutralen Leitung (13) verbunden ist, wobei die dritte Induktivität (29) und der dritte Kondensator (30) zusammen eine Filterschaltung (42) bilden.

3. Leistungswandler (100) nach Anspruch 1, wobei eine Frequenz der niederfrequenten Sinuswelle (72) gleich einer Frequenz einer Ausgangswechselstromleistung (52) ist, die in den Stromrichter (100) eingespeist oder von dem Stromrichter (100) ausgegeben wird.

4. Leistungswandler (100) nach Anspruch 1 oder Anspruch 3, wobei das Steuersignal (60, 61, 62, 63), das für jeden des ersten Schalters (191), des zweiten Schalters (192), des dritten Schalters (201) und des vierten Schalters (202) von der Steuerung (23) bereitgestellt wird, durch Vergleichen der niederfrequenten Sinuswelle (72) mit dem hochfrequenten Dreiecksträger (71) erzeugt wird.

5. Leistungswandler (100) nach Anspruch 1 umfasst ferner einen ersten Differenzverstärker (24), einen zweiten Differenzverstärker (25), einen dritten Differenzverstärker (26), ein erstes Stromerfassungselement (27), das in Reihe mit der Wechselstromeingangsleitung (11) und der ersten Induktivität (15) geschaltet ist und ein Eingangsstromsignal (80) an die Steuerung (23) ausgibt, ein zweites Stromerfassungselement (28), das in Reihe mit der Wechselstromausgangsleitung (12) geschaltet ist und ein Ausgangsstromsignal (81) an die Steuerung (23) ausgibt eine dritte Induktivität (29), die mit der AC-Leistungsausgangsleitung (12) verbunden ist und mit dem Knotenpunkt zwischen dem dritten Schalter (201) und dem vierten Schalter (202) verbunden ist, einen dritten Kondensator (30), der mit dem Knotenpunkt zwischen der AC-Leistungsausgangsleitung (12) und der neutralen Leitung (13) verbunden ist und zusammen mit der dritten Induktivität (29) eine Filterschaltung (42) bildet und ein drittes Stromerfassungselement (31), das mit dem Knoten zwischen dem dritten Schalter (201) und dem vierten Schalter (202) verbunden ist und in Reihe mit der dritten Induktivität (29) geschaltet ist, um ein Wechselrichterstromsignal (85) an die Steuerung (23) auszugeben;
wobei der erste Differenzverstärker (24) ein erstes Eingangsende (241), das mit der Wechselstrom-Eingangsleitung (11) verbunden ist, ein zweites Eingangsende (242), das mit der neutralen Leitung (13) verbunden ist, und ein erstes Ausgangsende (243) aufweist, das ein Eingangsspannungssignal (82) an die Steuerung (23) liefert, der zweite Differenzverstärker (25) ein drittes Eingangsende (251), das mit der Wechselstrom-Ausgangsleitung (12) verbunden ist, ein viertes Eingangsende (252), das mit der neutralen Leitung (13) verbunden ist, und ein zweites Ausgangsende (253), das ein Ausgangsspannungssignal (83) für die Steuerung (23) bereitstellt, umfasst, der dritte Differenzverstärker (26) ein fünftes Eingangsende (261), das mit dem ersten Bus (16) verbunden ist, ein sechstes Eingangsende (262), das mit dem zweiten Bus (17) verbunden ist, und ein drittes Ausgangsende (263), das ein Busspannungssignal (84) an die Steuerung (23) liefert, aufweist und die Steuerung (23) die an die erste Halbbrückenschaltung (19) ausgegebenen Steuersignale (60) auf der Basis des Eingangsstromsignals (80), des Eingangsspannungssignals (82) und des Busspannungssignals (84) einstellt, und die an die (20) ausgegebenen Steuersignale (60) auf der Basis des Ausgangsstromsignals (81), des Ausgangsspannungssignals (83) und des Wechselrichterstromsignals (85) einstellt.

6. Leistungswandler (100) nach Anspruch 5, wobei jedes des ersten Eingangsendes (241), des zweiten Eingangsendes (242), des dritten Eingangsendes (251), des vierten Eingangsendes (252), des fünften Eingangsendes (261) und des sechsten Eingangsendes (262) mit einem seriellen Spannungsteilerwiderstand (244, 245) versehen ist und jeder der seriellen Spannungsteilerwiderstände (244, 245) aus mindestens zwei Widerständen besteht.

7. Leistungswandler (100) nach Anspruch 1, der ferner eine Gleichstrom-(DC)-Leistungswandlerschaltung (32) umfasst, die mit dem ersten Bus (16) und dem zweiten Bus (17) verbunden ist.

## Revendications

1. Un convertisseur de puissance (100), comprenant:
une ligne d'entrée d'alimentation en courant alternatif (AC) (11);
une ligne de sortie de courant alternatif (12);
une ligne neutre (13);
un premier condensateur (14), connecté à la ligne d'entrée d'alimentation en courant alternatif AC (11) et à la ligne neutre (13);
un premier inducteur (15), connecté à la ligne d'entrée de courant alternatif AC (11);
un premier bus (16) et un deuxième bus (17);
un deuxième condensateur (18), connecté au premier bus (16) et au deuxième bus (17);
un premier circuit en demi-pont (19), comprenant un premier commutateur (191) connecté au premier bus (16), et un deuxième commutateur (192) connecté en série avec le premier commutateur (191) et connecté au deuxième bus (17), dans lequel le premier inducteur (15) est connecté à un nœud entre le premier commutateur (191) et le deuxième commutateur (192);
un deuxième circuit en demi-pont (20), comprenant un troisième commutateur (201) connecté au premier bus (16), et un quatrième commutateur (202) connecté en série avec le troisième commutateur (201) et connecté au deuxième bus (17), dans lequel la ligne de sortie de courant alternatif AC (12) est connectée à un nœud entre le troisième commutateur (201) et le quatrième commutateur (202);
un troisième circuit en demi-pont (21), comprenant un cinquième commutateur (211) connecté au premier bus (16), et un sixième commutateur (212) connecté en série avec le cinquième commutateur (211) et connecté au deuxième bus (17);
un deuxième inducteur (22), ayant une extrémité connectée à un nœud entre le cinquième commutateur (211) et le sixième commutateur (212) et une autre extrémité connectée à la ligne neutre (13); et
un contrôleur (23), configuré pour fournir un signal de commande (60, 61, 62, 63, 64, 65) à chacun du premier circuit en demi-pont (19), du deuxième circuit en demi-pont (20) et du troisième demi-circuit circuit en pont (21),
dans lequel le convertisseur de puissance (100) est **caractérisé en ce que** :
le signal de commande (62, 63, 64, 65) fourni par le contrôleur (23) pour le deuxième circuit en demi-pont (20) ou le troisième circuit en demi-pont (21) est généré en comparant une onde sinusoïdale mélangée (70) avec une porteuse triangulaire haute fréquence (71), l'onde sinusoïdale mélangée (70) est générée en mélangeant une harmonique du troisième ordre (73) d'une onde sinusoïdale basse fréquence (72) dans l'onde sinusoïdale basse fréquence (72), et l'onde sinusoïdale basse fréquence (72) pour moduler le signal de commande (60, 61, 62, 63) du premier circuit en demi-pont (19) et du second circuit en demi-pont (20) a une phase inversée par rapport à la phase de l'onde sinusoïdale basse fréquence (72) pour moduler le signal de commande (64, 65) du troisième circuit en demi-pont (21).

2. Le convertisseur de puissance (100) de la revendication 1, comprenant en outre un troisième inducteur (29) connecté à la ligne de sortie de puissance alternative AC (12) et connecté au nœud entre le troisième commutateur (201) et le quatrième commutateur (202), et un troisième condensateur (30) connecté à un nœud entre la ligne de sortie de courant alternatif AC (12) et la ligne neutre (13), dans lequel le troisième inducteur (29) et le troisième condensateur (30) forment ensemble un circuit de filtrage (42).

3. Le convertisseur de puissance (100) de la revendication 1, dans lequel une fréquence de l'onde sinusoïdale basse fréquence (72) est égale à une fréquence d'une puissance alternative de sortie AC (52) entrée dans le convertisseur de puissance (100) ou produite en sortie du convertisseur de puissance (100).

4. Le convertisseur de puissance (100) de la revendication 1 ou de la revendication 3, dans lequel le signal de commande (60, 61, 62, 63) fourni par le contrôleur (23) à chacun parmi les premier commutateur (191), le deuxième commutateur (192), le troisième commutateur (201) et le quatrième commutateur (202), est généré en comparant l'onde sinusoïdale basse fréquence (72) avec la porteuse triangulaire haute fréquence (71).

5. Le convertisseur de puissance (100) de la revendication 1 comprenabt en outre un premier amplificateur différentiel (24), un deuxième amplificateur différentiel (25), un troisième amplificateur différentiel (26), un premier élément de détection de courant (27) connecté en série avec la ligne d'entrée d'alimentation en courant alternatif AC (11) et le premier inducteur (15) et délivrant en sortie un signal de courant d'entrée (80) au contrôleur (23), un second élément de détection de courant (28) connecté en série avec la ligne de sortie d'alimentation en courant alternatif (12) et générant en sortie un signal de courant de sortie (81) vers le contrôleur (23), un troisième inducteur (29) connecté à la ligne de sortie de courant alternatif AC (12) et connecté au nœud entre le troisième commutateur (201) et le quatrième commutateur (202), un troisième condensateur (30) connecté au nœud entre la ligne de sortie de courant alternatif AC (12) et la ligne de neutre (13) et formant un circuit de filtrage (42) avec le troisième inducteur (29), et un troisième élément de détection de courant (31) connecté au nœud entre le troisième commutateur (201) et le quatrième commutateur (202) et connecté en série avec le troisième inducteur (29) pour délivrer un signal de courant inverseur (85) au contrôleur (23);
dans lequel le premier amplificateur différentiel (24) comprend une première extrémité d'entrée (241) connectée à la ligne d'entrée de courant alternatif AC (11), une deuxième extrémité d'entrée (242) connectée à la ligne neutre (13), et une première extrémité de sortie (243) fournissant un signal de tension d'entrée (82) au contrôleur (23), le deuxième amplificateur différentiel (25) comprend une troisième extrémité d'entrée (251) connectée à la ligne de sortie d'alimentation AC (12), une quatrième extrémité d'entrée (252) connectée à la ligne neutre (13) et une seconde extrémité de sortie (253) fournissant un signal de tension de sortie (83) au contrôleur (23), le troisième amplificateur différentiel (26) comprend une cinquième extrémité d'entrée (261) connectée au premier bus (16), une sixième extrémité d'entrée (262) connectée au deuxième bus (17) et une troisième extrémité de sortie (263)) fournissant un signal de tension de bus (84) au contrôleur (23), et le contrôleur (23) ajuste les signaux de commande (60) émis vers le premier circuit en demi-pont (19) sur la base du signal de courant d'entrée (80), le signal de tension d'entrée (82) et le signal de tension de bus (84), et ajuste les signaux de commande (60) délivrés au (20) sur la base du signal de courant de sortie (81)), le signal de tension de sortie (83) et le signal de courant de l'onduleur (85).

6. Le convertisseur de puissance (100) de la revendication 5, dans lequel chacune parmi la première extrémité d'entrée (241), la deuxième extrémité d'entrée (242), la troisième extrémité d'entrée (251), la quatrième extrémité d'entrée (252), la cinquième extrémité d'entrée (261) et la sixième extrémité d'entrée (262) est pourvue d'une résistance de division de tension série (244, 245), et chacune des résistances de division de tension série (244, 245) comprend au moins deux résistances.

7. Le convertisseur de puissance (100) de la revendication 1, comprenant en outre un circuit de conversion de puissance à courant continu (CC) (32) connecté au premier bus (16) et au second bus (17).
